# EUROPÄISCHE PATENTSCHRIFT

(11) **EP 3 879 312 B1**
(45) Veröffentlichungstag und Bekanntmachung des Hinweises auf die Patenterteilung: **10.07.2024**
(21) Anmeldenummer: 20162660.3
(22) Anmeldetag: 12.03.2020
(51) Int. Cl.: G01V 8/20

(54) **OPTISCHER SENSOR**
OPTICAL SENSOR
CAPTEUR OPTIQUE

(43) Veröffentlichungstag der Anmeldung: 15.09.2021
(73) Patentinhaber: Leuze electronic GmbH + Co. KG, 73277 Owen/Teck (DE)
(72) Erfinder: Rohbeck, Volker, 85244 Röhrmoos (DE); Bauder, Frank, 72660 Beuren (DE); Eder, Alexander, 86928 Hofstetten (DE); Feller, Bernhard, 86316 Friedberg (DE)
(74) Vertreter: Ruckh, Rainer Gerhard

(56) Entgegenhaltungen:
- EP-A1- 1 870 734
- CN-U- 205 678 415
- DE-A1- 102007 024 210
- US-A1- 2019 094 358

## Beschreibung

Die Erfindung betrifft einen optischen Sensor und ein Verfahren zum Betrieb eines optischen Sensors.

Derartige optische Sensoren werden generell zur Erfassung von Objekten innerhalb eines Überwachungsbereichs eingesetzt. Insbesondere können die optischen Sensoren als Sicherheitssensoren ausgebildet sein, mittels derer Gefahrenbereiche an Maschinen und Anlagen überwacht werden um Gefährdungen von Personen zu vermeiden.

Die Überwachungsfunktion eines Sicherheitssensors erfolgt dabei derart, dass mit diesem ein Schutzfeld überwacht wird, wobei dann, wenn mit dem Sicherheitssensor ein Objekteingriff im Schutzfeld registriert wird, der Sicherheitssensor ein entsprechendes Ausgangssignal generiert, das über eine Sicherheitsausgangsstufe an eine Steuerung der Maschine oder Anlage ausgegeben wird, so dass dann eine Sicherheitsfunktion ausgelöst wird, beispielsweise in Form eines Stillsetzens der Maschine oder Anlage um so Gefährdungen für Personen auszuschließen.

Bei derartigen Sicherheitssensoren erfolgt auch dann, wenn ein interner Fehler durch Ausfall einer internen Komponente im Sicherheitssensor festgestellt wird, die Auslösung der Sicherheitsfunktion und damit das Stillsetzen der Maschine oder Anlage.

Dies führt zu hohen Stillstandszeiten der Maschine oder Anlage.

Die CN 205 678 415 U1 betrifft einen Lichtvorhang mit zwei Sender-Empfängereinheiten. Bei einer Störung einer Sender-Empfänger-Einheit arbeitet die andere weiter.

Die DE 10 2007 024 210 A1 betrifft einen optoelektronischen Sensor zum Absichern eines Gefahrenbereichs besitzt einen ersten und einen zweiten Sensorteil. Die beiden Sensorteile sind mit einem räumlichen Abstand zueinander angeordnet. Jeder Sensorteil besitzt eine Vielzahl von Sendeelementen zum Erzeugen von Sendestrahlen und eine Vielzahl von Empfangselementen zum Empfangen der Sendestrahlen. Auf diese Weise wird eine Vielzahl von gegenläufigen Sendestrahlen zwischen den Sensorteilen gebildet. Dabei weist jeder Sensorteil zumindest einen Auswerteschaltkreis auf, der mit den Empfangselementen des jeweiligen Sensorteils gekoppelt ist. Jeder Auswerteschaltkreis ist dazu ausgebildet, ein Abschaltsignal in Abhängigkeit von den jeweils angekoppelten Empfangselementen zu erzeugen.

Die EP 1 870 734 A1 betrifft ein Sicherheitslichtgitter bestehend aus wenigstens zwei Sende-Empfangsleisten, in welchen jeweils Sende- und Empfangselemente angeordnet sind. Die Sende-Empfangsleisten sind einander gegenüberliegend angeordnet, wobei zwischen diesen Sende-Empfangsleisten ein Schutzfeld gebildet ist. Mittel zur Synchronisation der Sende-Empfangsleisten sind ausgebildet und eine Steuer- und Auswerteeinheit ist vorhanden. Die Sende-Empfangsleisten sind identisch aufgebaut und in jeder Sende-Empfangsleiste ist eine Steuer- und Empfangseinheit integriert. Die Steuer- und Auswerteeinheiten sind einkanalig ausgebildet und weisen jeweils einen einzigen sicherheitsgerichteten Ausgang auf.

Die US 2019/0094358 A1 betrifft ein Sensorsystem für einen Aufzug. Das Sensorsystem umfasst ein matrixförmiges Sensorarray mit mehreren Sender-Empfänger-Paaren. Jedes Sender-Empfänger-Paar weist einen Lichtstrahlen emittierenden Sender und einen Lichtstrahlen empfangenden Empfänger auf, die nach dem Lichtschrankenprinzip arbeiten. Das Sensorarray kann redundante Lichtstrahlenführungen aufweisen.

Der Erfindung liegt die Aufgabe zugrunde die Funktionalität eines eingangs genannten optischen Sensors zu verbessern und zu erweitern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit wenigstes zwei Sender-Empfänger-Einheiten, umfassend jeweils wenigstens einen Lichtstrahlen emittierenden Sender und wenigstens einen Lichtstrahlen empfangenden Empfänger. Jeder Sender-Empfänger-Einheit sind eine Auswerteeinheit und eine Ausgangsstufe zugeordnet. In einer Auswerteeinheit werden in Abhängigkeit von Signalen der jeweiligen Sender-Empfänger-Einheiten Ausgangssignale generiert und über die Ausgangsstufe ausgegeben. Bei Ausfall einer Sender-Empfänger-Einheit arbeitet die andere rückwirkungsfrei weiter. Der optische Sensor ist ein Sicherheitssensor, der bei Ausfall einer Sender-Empfänger-Einheit in einem sicherheitstechnisch unkritischen Betriebszustand mit reduziertem Funktions- oder Leistungsumfang nur für eine vorgegebene Zeit weiterbetrieben wird, wobei für den optischen Sensor ein degradiertes Sicherheitsniveau realisiert ist.

Die Erfindung betrifft weiterhin ein entsprechendes Verfahren.

Der erfindungsgemäße optische Sensor bildet ein fehlertolerantes und damit robustes System derart, dass bei Ausfall einer Sender-Empfänger-Einheit der Betrieb des optischen Sensors nicht gestoppt wird. Vielmehr bleibt der optische Sensor für weitere Objektdetektionen funktionsfähig, in dem für diese die weitere, nicht ausgefallene Sender-Empfänger-Einheit die Objektdetektionen und damit die Überwachungsfunktion des optischen Sensors fortgesetzt wird.

Dabei liegt der Erfindung die Überlegung zugrunde, dass der optische Sensor bei dem Ausfall einer Sender-Empfänger-Einheit auch dann sinnvoll weiterbetrieben werden kann, wenn dessen Funktionalität oder Sicherheitsniveau durch den Ausfall der Sender-Empfänger-Einheit beeinträchtigt ist.

Der Anwender kann dabei vorteilhaft selbst entscheiden, in welchem Umfang und für welche Überwachungsfunktionen der optische Sensor bei Ausfall einer Sender-Empfänger-Einheit noch eingesetzt werden kann.

Besonders vorteilhaft kann diese Entscheidungsfindung automatisiert im optischen Sensor selbst erfolgen. In diesem Fall sind die Auswerteeinheiten für beide Sender-Empfänger-Einheiten miteinander über Datenverbindungen gekoppelt, oder an eine gemeinsame Steuereinheit angeschlossen.

Alternativ ist den Sender-Empfänger-Einheiten eine gemeinsame Auswerteeinheit zugeordnet.

In diesem Fall registriert die Auswerteeinheit oder die Steuereinheit den Ausfall einer Sender-Empfänger-Einheit und reagiert dann darauf derart, dass der optische Sensor in einer geänderten Betriebsart weiterbetrieben wird.

Nicht nur die Auswerteeinheiten sind miteinander gekoppelt. Dasselbe gilt dann vorteilhaft auch für die Ausgangsstufen. Hierzu können die über die Ausgangsstufe ausgegebenen Ausgangssignale logisch verknüpft werden.

Die logische Verknüpfung kann beispielsweise in der Steuereinheit erfolgen.

Insbesondere für den Fall, dass für die Sender-Empfänger-Einheit nur eine gemeinsame Auswerteeinheit vorgesehen ist, ist den Sender-Empfänger-Einheiten eine gemeinsame Ausgangsstufe zugeordnet.

Erfindungsgemäß ist der optische Sensor ein Sicherheitssensor. Hierzu weisen die oder jede Auswerteeinheit und Ausgangsstufe jeweils einen fehlersicheren Aufbau auf.

Gemäß einer bevorzugten Ausgestaltung wird ein Ausfall einer Sender-Empfänger-Einheit in einer Auswerteeinheit oder in der Steuereinheit erkannt, wobei insbesondere bei Ausfall einer Sender-Empfänger-Einheit in der Auswerteeinheit oder Steuereinheit ein Warnsignal generiert wird.

Den Ausfall einer Sender-Empfänger-Einheit des optischen Sensors wird somit selbsttätig in diesem oder in der zugeordneten Steuereinheit erkannt und mit dem Warnsignal einem Anwender angezeigt.

Erfindungsgemäß wird dieser bei Ausfall einer Sender-Empfänger-Einheit in einem sicherheitstechnisch unkritischen Betriebszustand weiterbetrieben.

Da der optische Sensor ein Sicherheitssensor ist, ist für diesen bei Ausfall einer Sender-Empfänger-Einheit ein degradiertes Sicherheitsniveau realisiert. Generell wird der optische Sensor nach Ausfall einer Sender-Empfänger-Einheit mit reduziertem Funktions- oder Leistungsumfang betrieben, insbesondere wird mit dem optischen Sensor nur noch ein reduziertes Sicherheitsniveau erzielt. Dieser verminderte Funktions- oder Leistungsumfang reicht jedoch aus, um den optischen Sensor in der jeweiligen Applikation für eine vorgegebene Zeit weiterhin in Betrieb zu halten, so dass unnötige Ausfälle oder Stillstandszeiten vermieden werden.

Der erfindungsgemäße optische Sensor kann in unterschiedlichen Ausführungsformen, beispielsweise als Scanner, Kamerasensor oder Lichtschrankenanordnung ausgebildet sein.

Gemäß einer vorteilhaften Ausführungsform ist der optische Sensor als Lichtvorhang ausgebildet. Zweckmäßig weist die Sender-Empfänger-Einheit jedes Lichtvorhangs eine Reihenanordnung von Sendern und eine Reihenanordnung von Empfängern auf. Die Reihenanordnungen der Sender beziehungsweise Empfänger beider Sender-Empfänger-Einheiten sind in einem gemeinsamen Gehäuse oder in getrennten Gehäusen angeordnet.

Mit dem so ausgebildeten Lichtvorhang werden vorzugsweise mit den Sender-Empfänger-Einheiten zueinander räumlich versetzte Schutzfelder überwacht.

Insbesondere können sich die Lichtstrahlen unterschiedlicher Sender-Empfänger-Einheiten überkreuzen.

Während die Sender-Empfänger-Einheiten des Lichtvorhangs vorteilhaft einen identischen Aufbau aufweisen, können deren Funktionen unterschiedlich ausgebildet sein.

Beispielsweise können die Sender-Empfänger-Einheiten unterschiedliche Auflösungen aufweisen, so dass das Detektionsvermögen der Sender-Empfänger-Einheit unterschiedlich ist.

Weiterhin können die Sender-Empfänger-Einheiten des Lichtvorhangs oder allgemein des optischen Sensors unterschiedliche Reaktionszeiten aufweisen, mit denen ein Ausgangssignal generiert wird. Beispielsweise kann in einer Sender-Empfänger-Einheit des Lichtvorhangs nach jedem Messzyklus ein Ausgangssignal generiert werden, das heißt, es ist generell eine kurze Reaktionszeit vorgesehen, wogegen die zweite Sender-Empfänger-Einheit erst nach mehreren Messzyklen ein Ausgangssignal generiert, das heißt generell eine längere Reaktionszeit aufweist.

In einer vorteilhaften Applikation kann die schneller arbeitende Sender-Empfänger-Einheit bei einer Objektdetektion als Sicherheitsfunktion eine Abbremsung einer Maschine oder Anlage auslösen, wogegen mit der langsameren Sender-Empfänger-Einheit eine verzögerte Abschaltung der Maschine oder Anlage bewirkt wird.

Vorteilhaft sind dessen Sender-Empfänger-Einheiten so synchronisiert, dass eine erste Sender-Empfänger-Einheit nur innerhalb von Zeitschlitzen aktiviert ist, in denen die andere Sender-Empfänger-Einheit nicht aktiviert ist, wobei nur die aktivierte Sender-Empfänger-Einheit Lichtstrahlen emittiert und empfängt.

Des Weiteren können die Sender und Empfänger jeder Sender-Empfänger-Einheit synchronisiert sein.

Die Erfindung wird im Folgenden anhand der Zeichnungen erläutert. Es zeigen:
- Fig 1:: Erstes Ausführungsbeispiel des erfindungsgemäßen optischen Sensors.
- Fig 2:: Zweites Ausführungsbeispiel des erfindungsgemäßen optischen Sensors.
- Fig 3:: Drittes Ausführungsbeispiel des erfindungsgemäßen optischen Sensors.
- Fig 4:: Viertes Ausführungsbeispiel des erfindungsgemäßen optischen Sensors.
- Fig 5:: Erste konstruktive Ausgestaltung des erfindungsgemäßen optischen Sensors.
- Fig 6:: Zweite konstruktive Ausgestaltung des erfindungsgemäßen optischen Sensors.
- Fig 7:: Dritte konstruktive Ausgestaltung des erfindungsgemäßen optischen Sensors.
- Fig 8:: Vierte konstruktive Ausgestaltung des erfindungsgemäßen optischen Sensors.
- Fig 9:: Fünfte konstruktive Ausgestaltung des erfindungsgemäßen optischen Sensors.

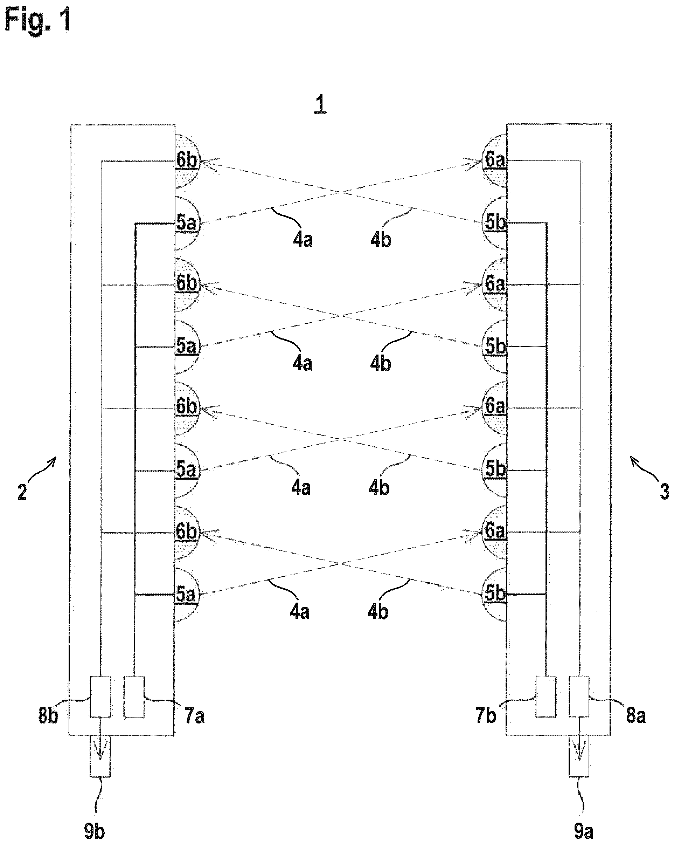

Die Figuren 1 - 4 zeigen unterschiedliche Ausführungsbeispiele des erfindungsgemäßen optischen Sensors in Form eines Lichtvorhangs 1. Der Lichtvorhang 1 weist generell zwei Gehäuse 2, 3 an gegenüberliegenden Rändern eines Überwachungsbereichs auf. Der optische Sensor ist als Sicherheitssensor ausgebildet und weist demzufolge einen fehlersicheren Aufbau auf, so dass dieser im Bereich der Sicherheitstechnik, insbesondere zur Gefahrenbereichs-Überwachung an einer gefahrbringenden Maschine oder Anlage eingesetzt wird.

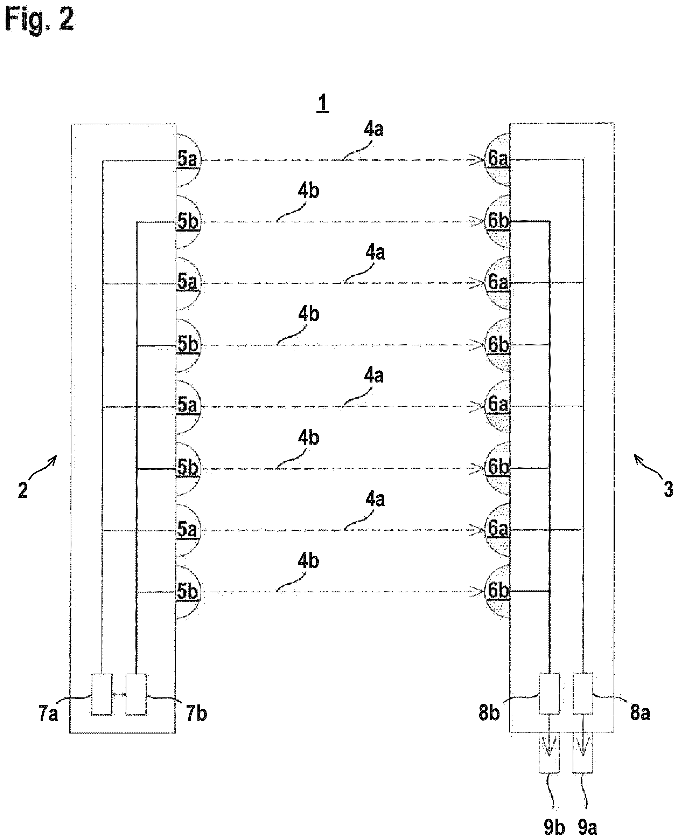

Der Lichtvorhang 1 gemäß den Figuren 1 und 2 weist zwei Sender-Empfänger-Einheiten auf. Prinzipiell können auch mehr als zwei Sender-Empfänger-Einheiten vorgesehen sein. Die erste Sender-Empfänger-Einheit weist einen Reihenanordnung von Lichtstrahlen 4a emittierenden Sendern 5a und Lichtstrahlen 4a empfangenden Empfängern 6a auf. Da ist jeweils ein Sender 5a einem Empfänger 6a zugeordnet, so dass bei freiem Überwachungsbereich die Lichtstrahlen 4a des Senders 5a auf diesen zugeordneten Empfänger 6a geführt sind. Die Sender 5a werden über eine Sendersteuerung 7a innerhalb vorgegebener Messzyklen jeweils einzeln nacheinander aktiviert. Die Empfänger 6a werden in bekannter Weise über die Lichtstrahlen 4a der Sender 5a optisch auf den Betrieb der Sender 5a synchronisiert. Die zweite Sender-Empfänger-Einheit ist entsprechend vorzugsweise identisch zur ersten Sender-Empfänger-Einheit aufgebaut und weist eine Reihenanordnung von Lichtstrahlen 4b emittierenden Sendern 5b und Lichtstrahlen 4a, 4b empfangenden Empfängern 6b auf, wobei auch diesen Sendern 5a, 5b eine Sendersteuerung 7b zugeordnet ist.

Mit den beiden Sender-Empfänger-Einheiten erfolgt jeweils eine Objektüberwachung innerhalb eines Schutzfelds.

Den Empfängern 6a, 6b beider Sender-Empfänger-Einheiten ist jeweils eine Auswerteeinheit 8a, 8b zugeordnet, in welchen in Abhängigkeit der Empfangssignale der jeweiligen Empfänger 6a, 6b ein Ausgangssignal generiert wird. Das Ausgangssignal ist im vorliegenden Fall von einem binären Schaltsignal gebildet, dessen Schaltzustände angeben, ob sich ein Objekt im jeweiligen Schutzfeld befindet oder nicht. Das Schaltsignal der Auswerteeinheit 8a, 8b jeder Sender-Empfänger-Einheit wird über eine Ausgangsstufe 9a, 9b ausgegeben.

Die Auswerteeinheiten 8a, 8b für beide Sender-Empfänger-Einheiten weisen einen fehlersicheren, insbesondere redundanten Aufbau in Form zweier sich zyklisch überwachender Rechnereinheiten auf. Die Ausgangsstufen 9a, 9b sind als Sicherheitsausgangsstufen ausgebildet und weisen ebenfalls einen fehlersicheren Aufbau auf. Insbesondere ist jede fehlersichere Ausgangsstufe 9a, 9b eine Sicherheitsausgangsstufe in Form eines Sicherheitsschaltausgangs, einer sicheren seriellen Punkt-zu-Punkt Datenübertragung oder eines Sicherheitsbusanschlusses.

Optional werden die Schaltsignale, die über die beiden Ausgangsstufen9a, 9b ausgegeben werden, in einer nicht dargestellten Steuereinheit logisch verknüpft, bevorzugt durch eine ODER-Verknüpfung. Die so generierte Ausgangsstufe 9a, 9b löst bei einer Objekterfassung in einer der Sender-Empfänger-Einheiten eine Sicherheitsfunktion aus, beispielsweise in Form des Stillsetzens der gefahrbringenden Maschine oder Anlage. Die Steuereinheit kann insbesondere von der die Maschine oder Anlage steuernden Steuerung gebildet sein.

Bei der Ausführungsform gemäß Figur 1 sind die Sender 5a der ersten Sender-Empfänger-Einheit im ersten Gehäuse 2 und die Empfänger 6a der ersten Sender-Empfänger-Einheit im zweiten Gehäuse 3 untergebracht. Die Sender 5b der zweiten Sender-Empfänger-Einheit sind im zweiten Gehäuse 3 untergebracht und bilden mit den Empfängern 6a der ersten Sender-Empfänger-Einheit eine alternierende Anordnung. Die Empfänger 6b der zweiten Sender-Empfänger-Einheit sind im ersten Gehäuse 2 untergebracht und bilden mit den Sendern 5a der ersten Sender-Empfänger-Einheit eine alternierende Anordnung. Die Lichtstrahlen 4a, 4b der Sender 5a, 5b der ersten und zweiten Sender-Empfänger-Einheit verlaufen gekreuzt.

Bei den Ausführungsformen der Figuren 2 - 4 sind die Sender 5a, 5b der ersten und zweiten Sender-Empfänger-Einheit im ersten Gehäuse 2 und die Empfänger 6a, 6b der ersten und zweiten Sender-Empfänger-Einheit im zweiten Gehäuse 3 angeordnet, wobei die Lichtstrahlen 4a, 4b der ersten und zweiten Sender-Empfänger-Einheit parallel zueinander verlaufen.

Bei der Ausführungsform gemäß Figur 2 bilden die Sender 5a, 5b der ersten und zweiten Sender-Empfänger-Einheit eine alternierende Reihenanordnung. Entsprechend bilden die Empfänger 6a, 6b der ersten und zweiten Sender-Empfänger-Einheit eine alternierende Anordnung.

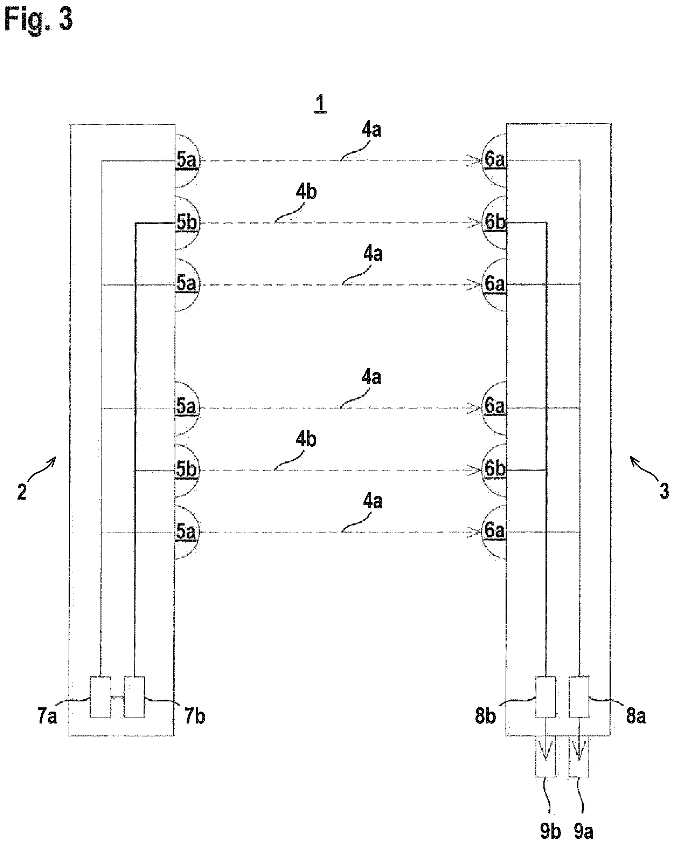

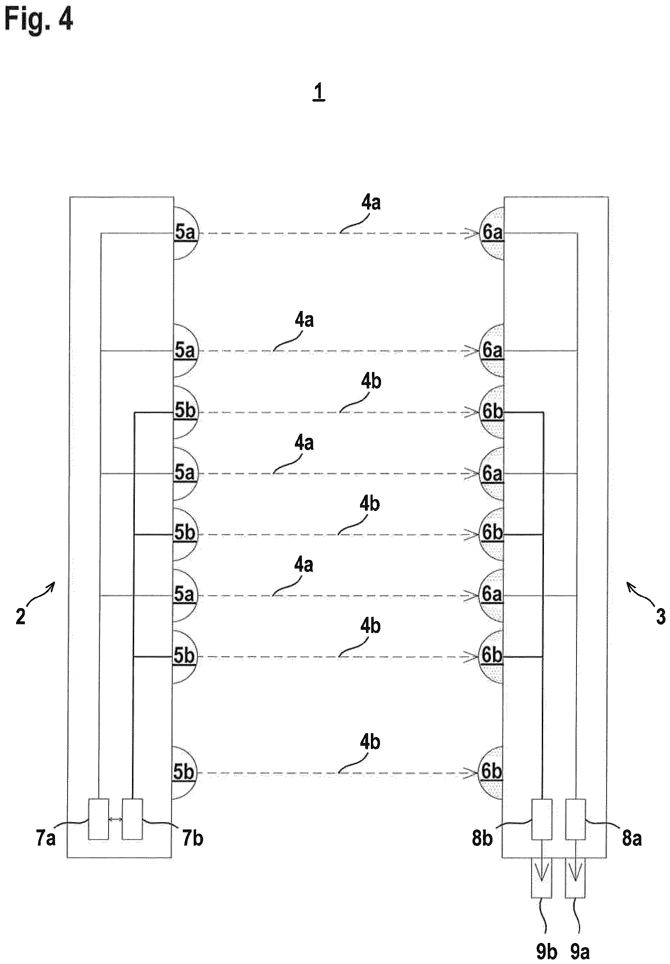

Bei den Ausführungsformen der Figuren 3 und 4 bilden die Sender 5a, 5b beziehungsweise Empfänger 6a, 6b mehrere räumlich getrennte Gruppen aus, wobei die mittlere Gruppe in Figur 4 überlappende Schutzfelder der ersten und zweiten Sender-Empfänger-Einheit ausbildet.

Die Sendersteuerungen 7a, 7b sind bei den Ausführungsformen der Figuren 2 - 4 zueinander synchronisiert, während die Auswerteeinheiten 8a, 8b unabhängig voneinander arbeiten.

Generell können Sender-Empfänger-Einheiten mit unterschiedlichen Auflösungen und/oder Reaktionszeiten vorgesehen sein.

Vorteilhaft sind deren Sender-Empfänger-Einheiten so synchronisiert, dass eine erste Sender-Empfänger-Einheit nur innerhalb von Zeitschlitzen aktiviert ist, in denen die andere Sender-Empfänger-Einheit nicht aktiviert ist.

Dabei emittiert und empfängt nur die aktivierte Sender-Empfänger-Einheit Lichtstrahlen 4a, 4b.

Im fehlerfreien Betrieb des Lichtvorhangs 1 arbeiten die Sender-Empfänger-Einheiten redundant, so dass mit diesen in wenigstens zwei, vorzugsweise zueinander versetzten und/oder überlappenden Schutzfeldern eine Objektdetektion erfolgt. Die dabei generierten, über die Ausgangsstufen 9a, 9b ausgegebenen Schaltsignale können unabhängig voneinander zur Steuerung der Maschine oder Anlage, insbesondere zur Auslösung von Sicherheitsfunktionen verwendet werden. Im vorliegenden Fall werden die Ausgangssignale in der Steuereinheit logisch verknüpft.

Ein Ausfall einer Sender-Empfänger-Einheit wird in der Steuereinheit erkannt. Alternativ kann dieser Ausfall in den Auswerteeinheiten 8a, 8b der Sender-Empfänger-Einheit erkannt werden, die hierzu vorzugsweise über Datenverbindungen gekoppelt sind.

Vorteilhaft wird bei Ausfall einer Sender-Empfänger-Einheit in der Auswerteeinheit 8a, 8b oder Steuereinheit ein Warnsignal generiert.

Damit wird ein Anwender über den Ausfall der Sender-Empfänger-Einheit informiert.

Erfindungsgemäß wird der Lichtvorhang 1 oder allgemein der optische Sensor bei Ausfall einer Sender-Empfänger-Einheit weiterbetrieben und zwar allein mit der noch intakten Sender-Empfänger-Einheit. Demzufolge generiert nur noch die dieser intakten Sender-Empfänger-Einheit zugeordnete Ausgangsstufe 9a, 9b ein Ausgangssignal zur Steuerung der Maschine oder Anlage.

Der Lichtvorhang 1 wird bei Ausfall einer Sender-Empfänger-Einheit in einen sicherheitstechnisch unkritischen Betriebszustand weiterbetrieben, wobei gegebenenfalls sicherheitstechnisch unkritische Betriebszustände nur für eine vorgegebene Zeit weiterbetrieben werden.

Da der Lichtvorhang 1 als Sicherheitssensor ausgebildet ist, ist für diesen bei Ausfall einer Sender-Empfänger-Einheit ein degradiertes Sicherheitsniveau realisiert.

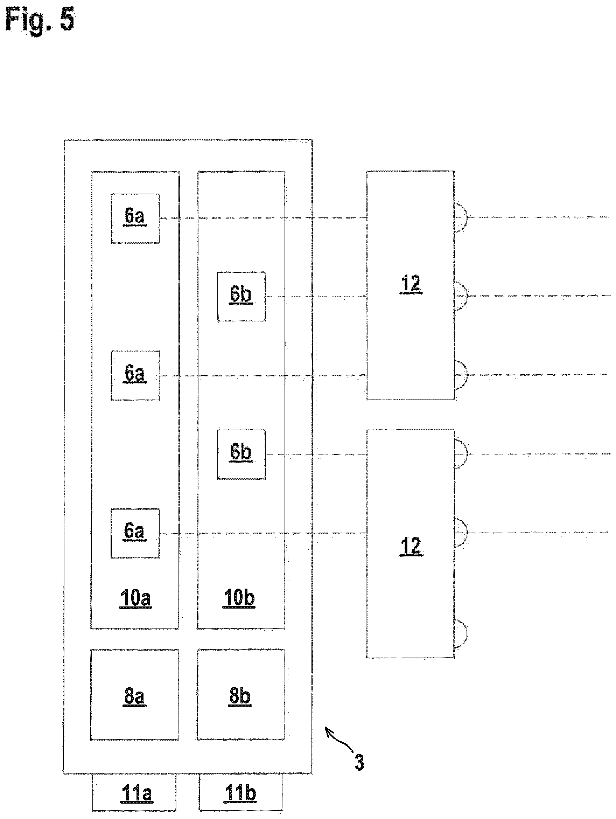

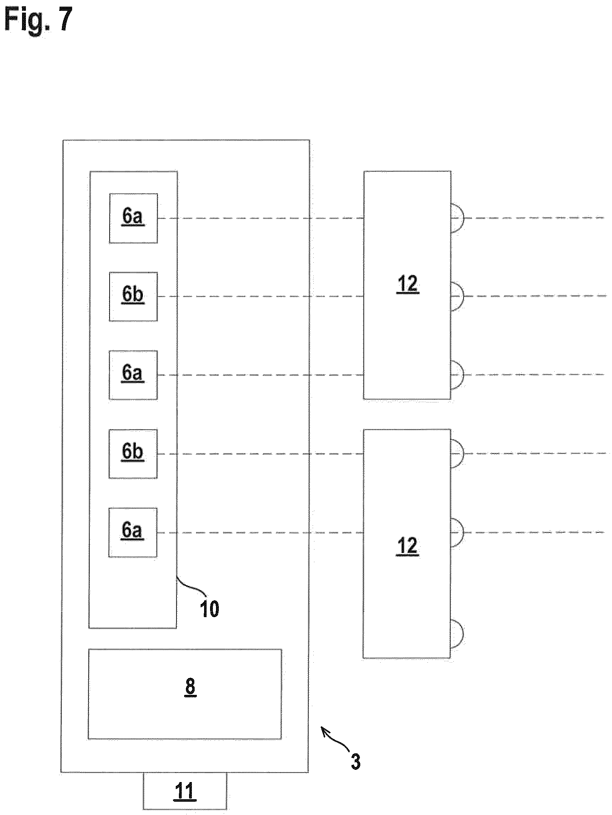

Die Figuren 5 - 9 zeigen unterschiedliche Konstruktionen zur Realisierung der Lichtvorhänge wie sie insbesondere in den Figuren 1 - 4 dargestellt sind.

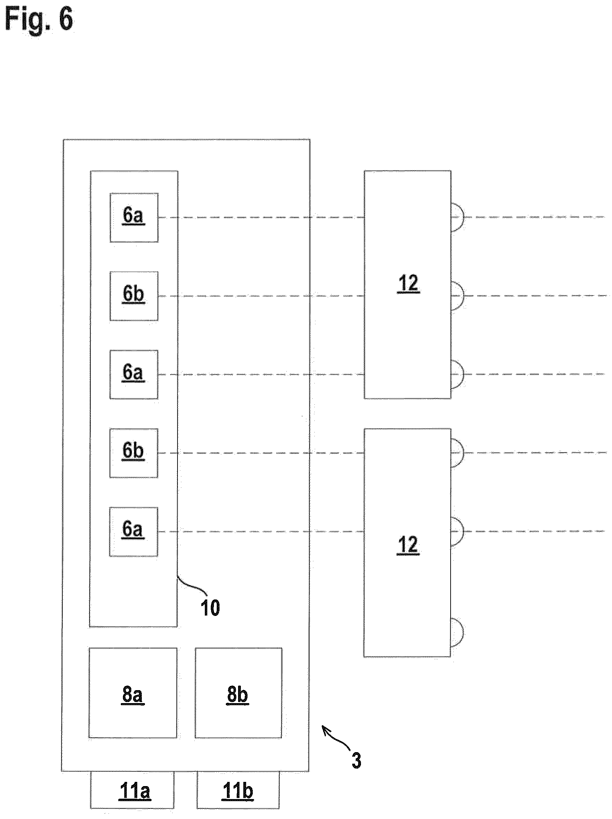

Die Figuren 5 und 6 zeigen konstruktive Ausführungsformen für den im Gehäuse 3 integrierten Empfängerteil des Lichtvorhangs 1 gemäß Figur 2.

Bei der Anordnung gemäß Figur 5 sind die Empfänger 6a der ersten Sender-Empfänger-Einheit auf einer ersten Leiterplatte 10a angeordnet, während die Empfänger 6b der zweiten Sender-Empfänger-Einheit auf einer zweiten Leiterplatte 10b angeordnet sind. Jeder Leiterplatte 10a, 10b ist eine Auswerteeinheit 8a, 8b zugeordnet. Zudem ist jeder Leiterplatte 10a, b und jeder Auswerteeinheit 8a, 8b ein Steckverbinder 11a, b zugeordnet, in dem die jeweilige Ausgangsstufe 9a, 9b integriert ist.

Weiterhin sind den Empfängern 6a, 6b Objektelemente 12 zugeordnet, die bevorzugt aus identisch ausgebildeten Kunststoff-Spritzgussteilen bestehen.

Das Senderteil des Lichtvorhangs 1 weist einen hierzu entsprechenden Aufbau auf.

Die Ausführungsform gemäß Figur 6 unterscheidet sich von der Ausführungsform gemäß Figur 5 nur dadurch, dass den Empfängern 6a, b beider Sender-Empfänger-Einheiten nur eine Auswerteeinheit 8 und nur ein Steckverbinder 11 mit einer Ausgangsstufe 9a oder 9b zugeordnet sind. In diesem Fall werden in der Auswerteeinheit 8 die Empfangssignale der Empfänger 8a, 8b beider Sender-Empfänger-Einheiten ausgewertet, wodurch ein Schaltsignal generiert wird, das über die im Steckverbinder 11 integrierte Ausgangsstufe 9a, 9b ausgegeben wird.

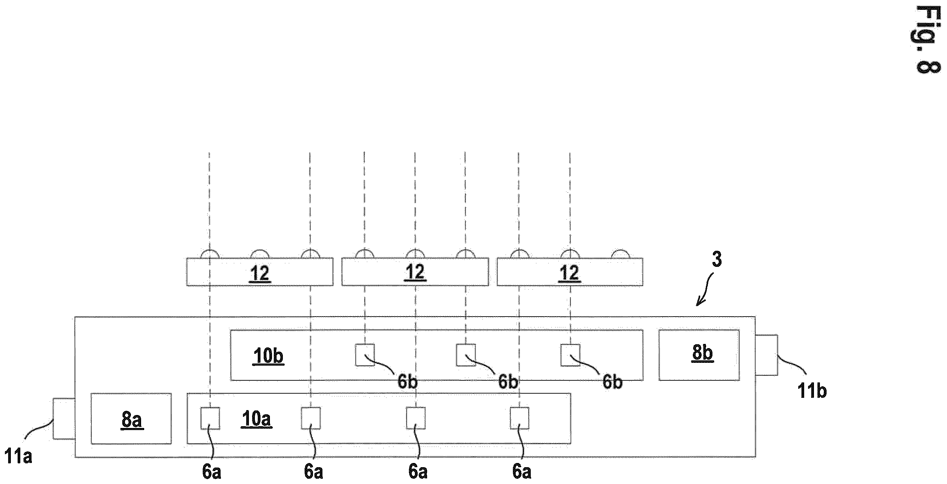

Die Ausführungsform gemäß Figur 8 entspricht im Wesentlichen der Ausführungsform gemäß Figur 5. Im Unterschied hierzu sind die Auswerteeinheiten 8a, b und Steckverbinder 11a, 11b an verschiedenen Enden des Gehäuses 2, 3 angeordnet.

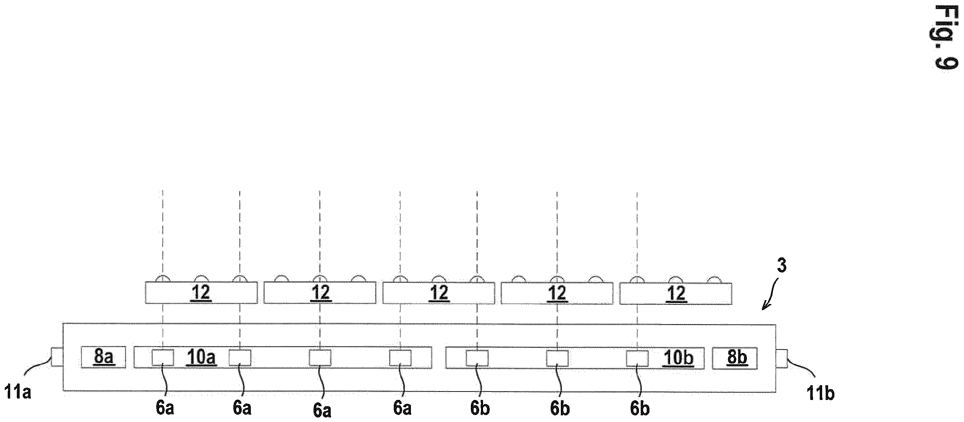

Bei der Ausführungsform gemäß Figur 9 sind zwei in Längsrichtung des Gehäuses 2, 3 hintereinander angeordnete Leiterplatten 10a, b vorgesehen. Auf der ersten Leiterplatte 10a befinden sich die Empfänger 6a, 6b der ersten Sender-Empfänger-Einheit, auf der zweiten Leiterplatte 10b befinden sich die Empfänger 8b der zweiten Sender-Empfänger-Einheit. Die Auswerteeinheit 8a und der Steckverbinder 11a der ersten Sender-Empfänger-Einheit sowie die Auswerteeinheit 8b und der Steckverbinder 11b der zweiten Sender-Empfänger-Einheit befinden sich an gegenüberliegenden Enden des Gehäuses 2, 3.

### Bezugszeichenliste

- (1): Lichtvorhang
- (2): Gehäuse
- (3): Gehäuse
- (4a, b): Lichtstrahlen
- (5a, b): Sender
- (6a, b): Empfänger
- (7a, b): Sendersteuerung
- (8a, b): Auswerteeinheit
- (9a, b): Ausgangsstufe
- (10a, b): Leiterplatte
- (11a, b): Steckverbinder
- (12): Optikelement

## Patentansprüche

1. Optischer Sensor mit wenigstens zwei Sender-Empfänger-Einheiten umfassend jeweils wenigstens ein Lichtstrahlen (4a) emittierenden Sender (5a) und wenigstens einen Lichtstrahlen (4b) empfangenden Empfänger (6a, 6b), wobei jeder Sender-Empfänger-Einheit eine Auswerteeinheit (8a, 8b) und eine Ausgangsstufe (9a, 9b) zugeordnet sind, wobei in einer Auswerteeinheit (8a, 8b) in Abhängigkeit von Signalen der jeweiligen Sender-Empfänger-Einheit Ausgangssignale generiert werden und über die Ausgangsstufe (9a, 9b) ausgegeben werden, und dass bei Ausfall einer Sender-Empfänger-Einheit die andere rückwirkungsfrei weiterarbeitet, wobei dieser ein Sicherheitssensor ist, **dadurch gekennzeichnet, dass** der optische Sensor bei Ausfall einer Sender-Empfänger-Einheit in einem sicherheitstechnisch unkritischen Betriebszustand mit reduziertem Funktions- oder Leistungsumfang nur für eine vorgegebene Zeit weiterbetrieben ist und für den optischen Sensor ein degradiertes Sicherheitsniveau realisiert ist.

2. Optischer Sensor nach Anspruch 1, **dadurch gekennzeichnet, dass** die Auswerteeinheiten (8a, 8b) für beide Sender-Empfänger-Einheiten miteinander über Datenverbindungen gekoppelt sind oder an eine gemeinsame Steuereinheit angeschlossen sind.

3. Optischer Sensor nach Anspruch 1, **dadurch gekennzeichnet, dass** den Sender-Empfänger-Einheiten eine gemeinsame Auswerteeinheit (8a, 8b) zugeordnet ist.

4. Optischer Sensor nach einem der Ansprüche 1 - 3, **dadurch gekennzeichnet, dass** die über die Ausgangsstufe (9a, 9b) ausgegebenen Ausgangssignale logisch verknüpft werden.

5. Optischer Sensor nach einem der Ansprüche 1 - 3, **dadurch gekennzeichnet, dass** den Sender-Empfänger-Einheiten eine gemeinsame Ausgangsstufe (9a, 9b) zugeordnet ist.

6. Optischer Sensor nach einem der Ansprüche 1 bis 5, **dadurch gekennzeichnet, dass** die oder jede Auswerteeinheit (8a, 8b) und Ausgangsstufe (9a, 9b) jeweils einen fehlersicheren Aufbau aufweisen.

7. Optischer Sensor nach Anspruch 6, **dadurch gekennzeichnet, dass** die fehlersichere Ausgangsstufe (9a, 9b) eine Sicherheitsausgangsstufe in Form eines Sicherheitsschaltausgangs, einer sicheren seriellen Punkt-zu-Punkt Datenübertragung oder eines Sicherheitsbusanschlusses ist.

8. Optischer Sensor nach einem der Ansprüche 1 bis 7 **dadurch gekennzeichnet, dass** die Sender-Empfänger-Einheiten redundant arbeiten.

9. Optischer Sensor nach einem der Ansprüche 1 bis 8, **dadurch gekennzeichnet, dass** ein Ausfall einer Sender-Empfänger-Einheit in einer Auswerteeinheit (8a, 8b) oder in der Steuereinheit erkannt wird.

10. Optischer Sensor nach Anspruch 9, **dadurch gekennzeichnet, dass** bei Ausfall einer Sender-Empfänger-Einheit in der Auswerteeinheit (8a, 8b) oder Steuereinheit ein Warnsignal generiert wird.

11. Optischer Sensor nach einem der Ansprüche 1 bis 10, **dadurch gekennzeichnet, dass** dieser ein Lichtvorhang (1) ist.

12. Optischer Sensor nach Anspruch 11, **dadurch gekennzeichnet, dass** die Sender-Empfänger-Einheiten jedes Lichtvorhangs (1) eine Reihenanordnung von Sendern (5a, 5b) und eine Reihenanordnung von Empfängern (6a, 6b) aufweist, wobei die Reihenanordnungen der Sender (5a, 5b) beziehungsweise Empfänger (6a, 6b) beider Sender-Empfänger-Einheiten in einem gemeinsamen Gehäuse (2, 3) oder in getrennten Gehäusen (2, 3) angeordnet sind.

13. Optischer Sensor nach einem der Ansprüche 1 bis 12 **dadurch gekennzeichnet, dass** die Sender-Empfänger-Einheiten identisch ausgebildet sind.

14. Optischer Sensor nach einem der Ansprüche 1 bis 13, **dadurch gekennzeichnet, dass** mit den Sender-Empfänger-Einheiten zueinander räumlich versetzte Schutzfelder überwacht werden.

15. Optischer Sensor nach einem der Ansprüche 1 bis 14, **dadurch gekennzeichnet, dass** sich die Lichtstrahlen (4a, 4b) unterschiedlicher Sender-Empfänger-Einheiten überkreuzen.

16. Optischer Sensor nach einem der Ansprüche 1 bis 15, **dadurch gekennzeichnet, dass** Sender-Empfänger-Einheiten mit unterschiedlichen Auflösungen und/oder Reaktionszeiten vorgesehen sind.

17. Optischer Sensor nach einem der Ansprüche 1 bis 16, **dadurch gekennzeichnet, dass** dessen Sender-Empfänger-Einheiten so synchronisiert sind, dass eine erste Sender-Empfänger-Einheit nur innerhalb von Zeitschlitzen aktiviert ist, in denen die andere Sender-Empfänger-Einheit nicht aktiviert ist.

18. Optischer Sensor nach Anspruch 17, **dadurch gekennzeichnet, dass** nur die aktivierte Sender-Empfänger-Einheit Lichtstrahlen (4a, 4b) emittiert und empfängt.

19. Optischer Sensor nach einem der Ansprüche 17 oder 18, **dadurch gekennzeichnet, dass** die Sender (5a, 5b) und Empfänger (6a, 6b) jeder Sender-Empfänger-Einheit synchronisiert sind.

20. Verfahren zum Betrieb eines optischen Sensors mit wenigstens zwei Sender-Empfänger-Einheiten umfassend jeweils wenigstens ein Lichtstrahlen (4a) emittierenden Sender (5a, 5b) und wenigstens einen Lichtstrahlen (4b) empfangenden Empfänger (6a, 6b), wobei jeder Sender-Empfänger-Einheit eine Auswerteeinheit (8a, 8b) und eine Ausgangsstufe (9a, 9b) zugeordnet sind, wobei in einer Auswerteeinheit (8a, 8b) in Abhängigkeit von Signalen der jeweiligen Sender-Empfänger-Einheit Ausgangssignale generiert werden und über die Ausgangsstufe (9a, 9b) ausgegeben werden, wobei bei Ausfall einer Sender-Empfänger-Einheit die andere rückwirkungsfrei weiterarbeitet, und wobei der optische Sensor ein Sicherheitssensor ist, **dadurch gekennzeichnet, dass**
der optische Sensor bei Ausfall einer Sender-Empfänger-Einheit in einem sicherheitstechnisch unkritischen Betriebszustand mit reduziertem Funktions- oder Leistungsumfang nur für eine vorgegebene Zeit weiterbetrieben ist und für den optischen Sensor ein degradiertes Sicherheitsniveau realisiert ist.

## Claims

1. An optical sensor with at least two transmitter-receiver units each comprising at least one transmitter (5a) emitting light beams (4a) and at least one receiver (6a, 6b) receiving light beams (4b), wherein an evaluation unit (8a, 8b) and an output stage (9a, 9b) are associated with each transmitter-receiver unit, wherein output signals are generated in an evaluation unit (8a, 8b) as a function of signals from the respective transmitter-receiver unit and are output via the output stage (9a, 9b), and that in the event of failure of one transmitter-receiver unit the other continues to operate without feedback, wherein a safety sensor is provided,
**characterised in that** the optical sensor continues to operate in a safety-technically uncritical operating state with a reduced functional or performance scope only for a predetermined time in the event of failure of a transmitter/receiver unit and a degraded safety level is implemented for the optical sensor.

2. An optical sensor according to claim 1, **characterised in that** the evaluation units (8a, 8b) for both transmitter-receiver units are coupled to each other via data connections or are connected to a common control unit.

3. An optical sensor according to claim 1, **characterised in that** a common evaluation unit (8a, 8b) is assigned to the transmitter-receiver units.

4. An optical sensor according to one of claims 1 to 3, **characterised in that** the output signals output via the output stage (9a, 9b) are logically linked.

5. An optical sensor according to one of claims 1 to 3, **characterised in that** a common output stage (9a, 9b) is assigned to the transmitter-receiver units.

6. An optical sensor according to one of claims 1 to 5, **characterised in that** the or each evaluation unit (8a, 8b) and output stage (9a, 9b) each have a fail-safe structure.

7. An optical sensor according to claim 6, **characterised in that** the fail-safe output stage (9a, 9b) is a safety output stage in the form of a safety switching output, a safe serial point-to-point data transmission or a safety bus connection.

8. An optical sensor according to one of claims 1 to 7, **characterised in that** the transmitter-receiver units operate redundantly.

9. An optical sensor according to one of claims 1 to 8, **characterised in that** a failure of a transceiver unit is detected in an evaluation unit (8a, 8b) or in the control unit.

10. An optical sensor according to claim 9, **characterised in that** a warning signal is generated in the evaluation unit (8a, 8b) or control unit in the event of failure of a transmitter/receiver unit.

11. An optical sensor according to one of claims 1 to 10, **characterised in that** it is a light curtain (1).

12. An optical sensor according to claim 11, **characterised in that** the transmitter-receiver units of each light curtain (1) are a series arrangement of transmitters (5, 5b) and a series arrangement of receivers (6a, 6b), wherein the series arrangements of the transmitters (5a, 5b) or receivers (6a, 6b) of both transmitter-receiver units are arranged in a common housing (2, 3) or in separate housings (2, 3).

13. An optical sensor according to one of claims 1 to 12, **characterised in that** the transmitter-receiver units are of identical design.

14. An optical sensor according to one of claims 1 to 13, **characterised in that** the transmitter-receiver units are used to monitor protective fields that are spatially offset from one another.

15. An optical sensor according to one of claims 1 to 14, **characterised in that** the light beams (4a, 4b) of different transmitter-receiver units intersect.

16. An optical sensor according to one of claims 1 to 15, **characterised in that** transmitter-receiver units with different resolutions and/or response times are provided.

17. An optical sensor according to one of claims 1 to 16, **characterised in that** its transmitter-receiver units are synchronised in such a way that a first transmitter-receiver unit is only activated within time slots in which the other transmitter-receiver unit is not activated.

18. An optical sensor according to claim 17, **characterised in that** only the activated transceiver unit emits and receives light beams (4a, 4b).

19. An optical sensor according to one of claims 17 or 18, **characterised in that** the transmitters (5a, 5b) and receivers (6a, 6b) of each transmitter-receiver unit are synchronised.

20. A method for operating an optical sensor with at least two transmitter-receiver units each comprising at least one transmitter (5a, 5b) emitting light beams (4a) and at least one receiver (6a, 6b) receiving light beams (4b),
wherein an evaluation unit (8a, 8b) and an output stage (9a, 9b) are associated with each transmitter-receiver unit, wherein output signals are generated in an evaluation unit (8a, 8b) as a function of signals from the respective transmitter-receiver unit and are output via the output stage (9a, 9b),
wherein in the event of failure of one transmitter-receiver unit, the other continues to operate without feedback, and
wherein the optical sensor is a safety sensor,
**characterised in that**, in the event of failure of a transmitter-receiver unit, the optical sensor continues to operate in a safety-technically uncritical operating state with a reduced functional or performance scope only for a predetermined time and a degraded safety level is implemented for the optical sensor.

## Revendications

1. Capteur optique comprenant au moins deux unités émetteur-récepteur comprenant chacune au moins un émetteur (5a) émettant des faisceaux lumineux (4a) et au moins un récepteur (6a, 6b) recevant des faisceaux lumineux (4b), dans lequel une unité d'évaluation (8a, 8b) et un étage de sortie (9a, 9b) sont associés à chaque unité émetteur-récepteur, dans lequel des signaux de sortie sont générés dans une unité d'évaluation (8a, 8b) en fonction des signaux de l'unité émetteur-récepteur respective et sont émis via l'étage de sortie (9a, 9b), et qu'en cas de défaillance d'une unité émetteur-récepteur, l'autre continue de fonctionner sans rétroaction, dans lequel il s'agit d'un capteur de sécurité,
**caractérisé par le fait que** le capteur optique continue à fonctionner dans un état de fonctionnement non critique du point de vue de la technique de sécurité avec une portée fonctionnelle ou de performance réduite uniquement pendant une durée prédéterminée en cas de défaillance d'une unité émetteur-récepteur et qu'un niveau de sécurité dégradé est mis en oeuvre pour le capteur optique.

2. Capteur optique selon la revendication 1, **caractérisé par le fait que** les unités d'évaluation (8a, 8b) des deux unités émetteur-récepteur sont couplées entre elles par des liaisons de données ou sont reliées à une unité de commande commune.

3. Capteur optique selon la revendication 1, **caractérisé en ce qu'**une unité d'évaluation commune (8a, 8b) est affectée aux unités émetteur-récepteur.

4. Capteur optique selon l'une des revendications 1 à 3, **caractérisé en ce que** les signaux de sortie émis via l'étage de sortie (9a, 9b) sont logiquement liés.

5. Capteur optique selon l'une des revendications 1 à 3, **caractérisé en ce qu'**un étage de sortie commun (9a, 9b) est affecté aux unités émetteur-récepteur.

6. Capteur optique selon l'une des revendications 1 à 5, **caractérisé en ce que** la ou chaque unité d'évaluation (8a, 8b) et l'étage de sortie (9a, 9b) ont chacun une structure à sécurité intégrée.

7. Capteur optique selon la revendication 6, **caractérisé en ce que** l'étage de sortie à sécurité intégrée (9a, 9b) est un étage de sortie de sécurité sous la forme d'une sortie de commutation de sécurité, d'une transmission de données point à point en série sécurisée ou d'une connexion de bus de sécurité.

8. Capteur optique selon l'une des revendications 1 à 7, **caractérisé en ce que** les unités émetteur-récepteur fonctionnent de manière redondante.

9. Capteur optique selon l'une des revendications 1 à 8, **caractérisé en ce qu'**une défaillance d'une unité émetteur-récepteur est détectée dans une unité d'évaluation (8a, 8b) ou dans l'unité de commande.

10. Capteur optique selon la revendication 9, **caractérisé en ce qu'**un signal d'avertissement est généré dans l'unité d'évaluation (8a, 8b) ou dans l'unité de commande en cas de défaillance d'une unité émettrice/réceptrice.

11. Capteur optique selon l'une des revendications 1 à 10, **caractérisé en ce qu'**il s'agit d'une barrière immatérielle (1).

12. Capteur optique selon la revendication 11, **caractérisé en ce que** les unités émetteur-récepteur de chaque rideau lumineux (1) sont un agencement en série d'émetteurs (5, 5b) et un agencement en série de récepteurs (6a, 6b), les agencements en série des émetteurs (5a, 5b) ou des récepteurs (6a, 6b) des deux unités émetteur-récepteur étant disposés dans un boîtier commun (2, 3) ou dans des boîtiers séparés (2, 3).

13. Capteur optique selon l'une des revendications 1 à 12, **caractérisé en ce que** les unités émetteur-récepteur sont de conception identique.

14. Capteur optique selon l'une des revendications 1 à 13, **caractérisé en ce que** les unités émetteur-récepteur sont utilisées pour surveiller des champs de protection qui sont décalés dans l'espace les uns par rapport aux autres.

15. Capteur optique selon l'une des revendications 1 à 14, **caractérisé en ce que** les faisceaux lumineux (4a, 4b) de différentes unités émetteur-récepteur se croisent.

16. Capteur optique selon l'une des revendications 1 à 15, **caractérisé en ce que** des unités émetteur-récepteur ayant des résolutions et/ou des temps de réponse différents sont prévues.

17. Capteur optique selon l'une des revendications 1 à 16, **caractérisé en ce que** ses unités émetteur-récepteur sont synchronisées de telle sorte qu'une première unité émetteur-récepteur n'est activée que dans les créneaux horaires où l'autre unité émetteur-récepteur n'est pas activée.

18. Capteur optique selon la revendication 17, **caractérisé en ce que** seule l'unité émetteur-récepteur activée émet et reçoit des faisceaux lumineux (4a, 4b).

19. Capteur optique selon l'une des revendications 17 ou 18, **caractérisé en ce que** les émetteurs (5a, 5b) et les récepteurs (6a, 6b) de chaque unité émetteur-récepteur sont synchronisés.

20. Procédé de fonctionnement d'un capteur optique avec au moins deux unités émetteur-récepteur comprenant chacune au moins un émetteur (5a, 5b) émettant des faisceaux lumineux (4a) et au moins un récepteur (6a, 6b) recevant des faisceaux lumineux (4b), dans lequel une unité d'évaluation (8a, 8b) et un étage de sortie (9a, 9b) sont associés à chaque unité émetteur-récepteur, dans lequel des signaux de sortie sont générés dans une unité d'évaluation (8a, 8b) en fonction des signaux provenant de l'unité émetteur-récepteur respective et sont émis via l'étage de sortie (9a, 9b),
dans lequel, en cas de défaillance d'une unité émetteur-récepteur, l'autre continue à fonctionner sans rétroaction, et
dans lequel le capteur optique est un capteur de sécurité,
**caractérisé en ce que**, en cas de défaillance d'une unité émetteur-récepteur, le capteur optique continue à fonctionner dans un état de fonctionnement non critique du point de vue de la technique de sécurité avec une portée fonctionnelle ou de performance réduite seulement pendant un temps prédéterminé et un niveau de sécurité dégradé est mis en oeuvre pour le capteur optique.
